(19)

Europäisches Patentamt
European Patent Office
Office européen des brevets

(11) EP 1 981 021 A1

(12) DEMANDE DE BREVET EUROPEEN

(43) Date de publication:
15.10.2008 Bulletin 2008/42

(51) Int Cl.:
G10L 15/22 (2006.01)      G10L 17/00 (2006.01)

(21) Numéro de dépôt: 08154426.4

(22) Date de dépôt: 11.04.2008

(84) Etats contractants désignés:
AT BE BG CH CY CZ DE DK EE ES FI FR GB GR
HR HU IE IS IT LI LT LU LV MC MT NL NO PL PT
RO SE SI SK TR
Etats d'extension désignés:
AL BA MK RS

(30) Priorité: 13.04.2007 FR 0754474

(71) Demandeur: FRANCE TELECOM
75015 Paris (FR)

(72) Inventeurs:
• Maffiolo, Valérie
  22300 Lannion (FR)
• Chateau, Noël
  38000 Grenoble (FR)
• Le Chenadec, Gilles
  22660 Trelevern (FR)

(54) Procede d'estimation de l'etat mental d'une personne

(57) Procédé d'estimation de l'état mental d'une personne à partir d'un signal émis par ladite personne.

Selon l'invention, ledit procédé comprend une phase d'apprentissage comportant des étapes consistant à :
- définir un ensemble de N caractéristiques comprenant ledit état mental et N-1 caractéristiques participant à l'expression de l'état mental dans ledit signal,
- établir une hiérarchie temporelle entre lesdites N caractéristiques associant une taille ($\Delta t_G$, $\Delta t_T$, $\Delta t_E$) de fenêtre temporelle perceptive par caractéristique augmentant selon le niveau hiérarchique,
- construire un corpus (1) de signaux, et attribuer à chaque signal ($S_i$) dudit corpus :
* une étiquette pour chacune desdites N caractéristiques,

* au moins une valeur ($v_i^{kj}$) d'au moins un indicateur ($I_k$) d'au moins une grandeur, mesurée sur ledit signal de corpus,

- construire successivement, à partir de l'ensemble des signaux du corpus (1), N modèles, un modèle de rang n (n=1, ..., N) consistant à établir une relation entre un jeu d'au moins une valeur ($v_i^{kj}$) d'indicateur et un score reflétant le degré d'association entre ledit jeu et la combinaison d'étiquettes des n premières caractéristiques de ladite hiérarchie temporelle.

Application au traitement des expressions d'états mentaux dans les interactions homme-machine et homme-homme médiées.

FIG. 1

**Description**

La présente invention concerne un procédé d'estimation de l'état mental d'une personne à partir d'un signal émis par ladite personne.

Dans la suite de la description, on entendra par « état mental » d'une personne un ensemble constitué par son état émotionnel (satisfaction, mécontentement, colère,...) et/ou son état cognitif (doute, certitude,...). Pour simplifier l'exposé, il sera fait souvent référence au seul état émotionnel, sans que cela doive être interprété comme limitatif.

L'invention trouve une application particulièrement avantageuse dans le domaine de l' « Affective Computing », à savoir la prise en compte et le traitement des expressions d'émotions dans les interactions homme-machine et homme-homme « médiées », c'est-à-dire réalisées par l'intermédiaire d'un média de communication tel qu'un téléphone par exemple.

Une façon de prendre en compte les expressions d'émotions est de doter les systèmes d'interaction de moyens (capteurs et algorithmes) permettant la détection (présence ou non d'une émotion) et la caractérisation (nature de l'émotion détectée) des états émotionnels d'un humain exprimés lors de l'interaction. Les bénéfices sont, du point de vue du dialogue entre l'utilisateur et le système, d'améliorer la compréhension de l'utilisateur par le système et d'améliorer également l'engagement de l'utilisateur dans le dialogue, ainsi que sa perception du système, pour une meilleure ergonomie et utilisabilité, et donc une meilleure satisfaction de l'utilisateur.

Du point de vue de la gestion de la relation client en centre d'appels, les bénéfices de la prise en compte de l'état émotionnel du client sont d'améliorer le traitement de contenus, par exemple améliorer la classification des messages dans le cas d'automates enquêteurs ou améliorer le traitement des appels pour une meilleure prise en charge de l'appel par un téléconseiller.

Dans le cas du traitement des appels en centre d'appels, de plus en plus de centres invitent le client, dès le décrochage, à formuler le motif de son appel avant redirection vers le téléconseiller techniquement compétent pour répondre à la demande. Dans ce contexte, la caractérisation de l'émotion contenue dans la voix permet de rediriger l'appel vers un téléconseiller exercé au traitement des situations de crise, ou en tout cas informé de l'état émotionnel du client, complété par des informations sur les caractéristiques du locuteur (son genre par exemple). Le téléconseiller pourra ainsi adopter des stratégies de gestion des émotions dès la prise d'appel.

Tous les procédés connus de détection et de caractérisation d'état émotionnel d'une personne présentent deux phases : une phase d'apprentissage et une phase de classification. Dans les deux phases, des prétraitements identiques sont effectués, dans un premier temps sur un corpus de signaux de parole, et dans un deuxième temps sur le signal de parole émis par la personne dont on cherche à estimer l'état mental. Ces prétraitements permettent d'extraire des valeurs d'indicateurs permettant d'exploiter les informations portées par le signal de parole. On extrait d'une grandeur d'un signal de parole un ou plusieurs indicateurs qui peuvent être par exemple des données statistiques. Dans le domaine acoustique, une « grandeur » est, par exemple, l'énergie, la fréquence fondamentale (« pitch »), le spectre de fréquence, le cepstre, etc. Un « indicateur » est, par exemple, la moyenne, l'écart-type, le maximum, le minimum, la plage maximum moins minimum, etc.

La première phase consiste à apprendre un modèle permettant d'établir les relations existant entre les valeurs des indicateurs extraites d'un corpus de signaux de parole (valeurs calculées sur la totalité des signaux ou sur des segments) et les étiquettes de caractéristiques participant à l'expression de l'état émotionnel dans un signal de parole. Ces « caractéristiques » sont, par exemple, le genre, le timbre, l'accent, le milieu social, etc. Les « étiquettes » sont les valeurs que peut prendre chacune de ces caractéristiques. C'est ainsi qu'à la caractéristique « genre » peuvent être associées les étiquettes « homme » et « femme ». La caractéristique « timbre » peut prendre les étiquettes « rauque » et « clair ». L'émotion elle-même est une caractéristique pouvant par exemple prendre les étiquettes « présence d'émotion » et « absence d'émotion » si l'on se contente de la seule détection de présence d'émotion dans le signal de parole. L'émotion peut prendre aussi des étiquettes de type colère, satisfaction, etc., voire des étiquettes mixtes comme par exemple « surprise et joie ». Cet apprentissage automatique permet en particulier l'identification de jeux d'indicateurs (et de leurs valeurs) pertinents qui caractérisent les étiquettes des caractéristiques impliquées dans l'expression de l'émotion.

Lors de la phase de classification, le modèle appris est appliqué aux valeurs des indicateurs extraites du signal de parole (ou d'une partie) émis par la personne dont on cherche à estimer si, par exemple, elle exprime de l'émotion et de quelle nature.

A ce jour, les procédés d'apprentissage se heurtent à deux problèmes majeurs : la nature des indicateurs à extraire et la méthode de combinaison de ces indicateurs.

Les expressions d'émotions dans la voix sont de deux grands types : linguistiques (lexique, syntaxe ou déroulement des dialogues) et acoustiques (paralinguistiques). Aussi, les systèmes d'apprentissage se basent soit uniquement sur des indicateurs linguistiques, soit uniquement sur des indicateurs acoustiques, soit sur une combinaison des deux types d'indicateurs.

La prise en compte des seuls indicateurs linguistiques permet de déterminer un certain nombre d'émotions lorsque l'état du locuteur est explicitement formulé ("Je ne suis pas content") voire implicitement formulé ("Non, j'en ai assez, je ne suis pas d'accord"). Pourtant, l'inférence de l'émotion à partir des seuls indicateurs linguistiques reste difficile, voire impossible dans certains cas. Il est parfois nécessaire de replacer le sens de la phrase dans son contexte pour pouvoir déterminer l'état émotionnel du locuteur. Des phrases simples mais ambiguës comme "Vous voilà" nécessitent l'utilisation de l'information acoustique pour lever l'ambiguïté sur le caractère émotionnel de l'énoncé.

La grande majorité des systèmes se basent uniquement sur des indicateurs acoustiques (Ververidis, D. and Kotropoulos, C. « Emotional Speech Recognition : Resources, features and methods ». In Speech Communication 48, pp 1162-1181 (2006)). Pourtant, l'utilisation des seuls indicateurs acoustiques peut présenter elle aussi des inconvénients. En effet, l'intonation de toute phrase résulte de la combinaison d'une intonation linguistique, liée aux mots et à la structure de la phrase, avec une intonation paralinguistique, liée à l'état du locuteur, son accent, etc. Un système purement acoustique ne peut pas différencier l'intonation linguistique de l'intonation paralinguistique, et ne peut donc détecter la présence d'émotion que lorsque l'intonation globale quitte le cadre de l'intonation linguistique. Il faut aussi noter que du fait que la joie et la colère s'expriment à travers les mêmes indicateurs acoustiques, il est particulièrement difficile de les discriminer sur cette seule base.

Les indicateurs contextuels sont complémentaires des deux types précédents, mais sont peu, voire pas utilisés. Pourtant, des facteurs tels que le contexte de l'interaction (homme-homme, homme-machine, cadre professionnel ou familial, etc.) influent de façon reconnue sur les expressions d'émotions et sur leur caractérisation.

Pour tenter de prendre en compte les grandeurs linguistiques et les grandeurs acoustiques, certains systèmes se basent sur la combinaison d'indicateurs extraits des ces deux types de grandeurs. Cette combinaison repose soit sur la fusion des décisions quant à la présence ou non d'une émotion par exemple, soit sur la fusion des indicateurs. La première approche consiste à apprendre un modèle à partir des indicateurs acoustiques, puis un modèle à partir des indicateurs linguistiques et à prendre la décision à partir des deux décisions fournies par les modèles associés à chaque type d'indicateurs. Cependant, cette approche ne permet pas de prendre en compte explicitement les interactions entre les indicateurs linguistiques et acoustiques. La seconde approche traite une représentation mixte du signal contenant à la fois les indicateurs linguistiques et acoustiques et apparaît comme la plus prometteuse.

Parmi les techniques d'apprentissage et de classification, deux familles sont classiquement distinguées : ceux qui considèrent les valeurs des indicateurs comme une séquence temporelle et ceux qui l'ignorent. La première famille utilise des réseaux de neurones, des modèles de Markov cachés et des mélanges de modèles de Markov cachés. La seconde famille utilise deux types de classifieurs, ceux qui estiment la distribution statistique des indicateurs (classifieurs de Bayes basés sur une distribution gaussienne, de mélanges de gaussiennes ou estimée) et ceux qui visent uniquement à discriminer les états émotionnels (réseaux de neurones, l'analyse linéaire discriminante, les arbres de décisions, les k plus proches voisins, les classifieurs SVM, etc.).

D'une manière générale, lors d'une interaction homme-homme médiée ou une interaction homme-machine, et dans le cas où ces interactions sont construites sur la seule modalité vocale, le locuteur fait passer à son interlocuteur, qu'il soit humain ou machine, une quantité d'informations à travers sa voix. En effet, la voix est le vecteur d'expression à la fois de ce qu'est le locuteur (âge, genre, timbre, personnalité, origine géographique, milieu social, etc.), de ses états émotionnels et cognitifs (il a peur, il doute), des actes communicatifs (il veut séduire, convaincre, etc.) et du contexte (il parle plus fort parce qu'il y a du bruit, il parle plus lentement parce que la qualité du réseau n'est pas bonne, etc.). Soulignons ici qu'il existe plusieurs formes de contexte, par exemple, le contexte au sens de l'environnement dans lequel se trouve le locuteur, mais aussi le contexte lié à l'application s'il s'agit d'une interaction homme-machine par exemple. Ce dernier cas rassemble, entre autres, les connaissances a priori de l'application reconnues comme portant une information d'émotion, telles que le nombre de tours de parole, la durée du tour de parole, etc.

Plusieurs travaux s'intéressent à toutes ces caractéristiques, mais le plus souvent elles sont étudiées indépendamment les unes des autres (Grimm, M, Kroschel, K. and Narayanan, S. « Modelling Emotion Expression and Perception Behaviour in Auditive Emotion Evaluation ». In Proceedings of Prosody (2006)). Or, une interdépendance existe bien entre toutes ces caractéristiques. Par exemple, si on s'intéresse à l'accent régional, il est impossible de constituer une base de données pertinente si l'on ne tient pas compte de l'interdépendance avec le timbre de la voix. En ce sens, la demande de brevet américain n° 2003/0069728 propose de tenir compte des caractéristiques du locuteur, comme l'âge et le genre, dans l'évaluation de l'émotion.

Par ailleurs, un problème commun à l'ensemble des techniques mises en oeuvre aujourd'hui est le choix de la taille de la fenêtre temporelle sur laquelle les valeurs des indicateurs sont calculées. La plupart des auteurs utilisent une segmentation unique selon une unité syntaxique choisie (phonèmes, syllabes, mots, silences, etc.) dans des systèmes de reconnaissance automatique de la parole. D'autres utilisent des systèmes combinant les sorties de modèles acoustiques basés sur des indicateurs dont les valeurs sont calculées sur des fenêtres temporelles différentes (Lee, C.M., Yildirim, S., and Bulut, M. « Emotion Recognition based on Phoneme Classes ». In Proceedings ICSLP, Jeju Island, Corea (2004)). Le résultat final du système est une probabilité obtenue en moyennant les probabilités de présence et de nature d'émotion sorties de classifieurs a posteriori.

Au niveau des indicateurs étudiés, il a été montré que ce n'est pas tant l'identité des indicateurs qui est importante dans la différenciation des caractéristiques d'une voix, mais la fenêtre temporelle dans laquelle les indicateurs sont observés et la façon dont les informations qu'ils portent, à savoir les caractéristiques du locuteur qu'ils décrivent, s'inscrivent dans la temporalité de la perception et interagissent entre elles.

Aussi, un but de la présente invention est de proposer un procédé d'estimation de l'état mental d'une personne à partir d'un signal émis par ladite personne, qui permettrait de prendre en compte, dans les modèles d'apprentissage et de classification, les caractéristiques pertinentes dans l'expression dudit état mental, leur interdépendance dans sa perception, et des indicateurs des grandeurs de toute nature (acoustiques, linguistiques, dialogiques, contextuelles, etc.) servant de vecteurs à l'expression dudit état mental, leurs interactions et les échelles temporelles sur lesquelles les indicateurs sont calculés.

Ce but est atteint, conformément à l'invention, du fait que ledit procédé comprend une phase d'apprentissage comportant des étapes consistant à :

- définir un ensemble de N caractéristiques comprenant, d'une part, ledit état mental et, d'autre part, N-1 caractéristiques participant à l'expression de l'état mental dans ledit signal, une caractéristique étant susceptible d'être associée à une pluralité d'étiquettes,
- établir une hiérarchie temporelle précisant les relations de dépendance entre lesdites N caractéristiques et associant une taille d'une fenêtre temporelle perceptive par caractéristique augmentant selon le niveau hiérarchique, ledit état mental présentant la taille de fenêtre la plus grande,
- construire un corpus de signaux, et attribuer à chaque signal dudit corpus :

     * une étiquette pour chacune desdites N caractéristiques,
     * au moins une valeur d'au moins un indicateur d'au moins une grandeur, mesurée sur ledit signal de corpus,

- construire successivement, à partir de l'ensemble des signaux du corpus, N modèles, un modèle de rang n (n = 1, ..., N) consistant à établir une relation entre un jeu d'au moins une valeur d'indicateur et un score reflétant le degré d'association entre ledit jeu et la combinaison d'étiquettes des n premières caractéristiques de ladite hiérarchie temporelle.

L'interdépendance entre les caractéristiques est donnée par des règles expertes. Par exemple, si le cadre concerné est celui de l'étude des émotions dans la voix des pilotes d'avion, l'expert pourra considérer que la détermination de la caractéristique « genre » n'est pas pertinente car le corpus est constitué de locuteurs uniquement masculins, mais que la caractéristique « bruit ambiant » l'est. La hiérarchie temporelle sur laquelle s'organisent les caractéristiques dépend donc du cadre applicatif et est apportée par l'expertise. Une décision sur une caractéristique participe à la décision sur la caractéristique qui la suit dans la hiérarchie temporelle, la décision prise sur cette dernière pouvant modifier la détermination de la caractéristique précédente. Par exemple, s'il a été déterminé par des règles expertes que pour un corpus de voix donné, le « genre » est la première caractéristique (n = 1) à être inférée par les auditeurs avant la caractéristique « timbre » (n = 2), alors, dans le procédé de l'invention, la décision issue du modèle de rang n = 1 du genre participera à la décision du modèle de rang n = 2 du timbre, la décision du modèle du timbre pouvant alors impacter la décision précédemment prise par le modèle du genre. En outre, dans l'écoute d'une voix, un auditeur peut dans un premier temps dire que la voix est celle d'un homme. Un peu plus tard dans l'écoute, il peut dire que son timbre est rauque. Le fait d'avoir déterminé que le timbre était rauque peut l'amener à reconsidérer son jugement du genre et dire que la voix est finalement celle d'une femme.

Ainsi, pour résumer, l'invention propose un procédé d'estimation d'expressions d'états mentaux, émotionnels et/ou cognitifs, capable dans la phase d'apprentissage de simultanément :

- prendre en compte des indicateurs associés à des grandeurs de toute nature, comme les grandeurs paralinguistiques (acoustiques), linguistiques (lexicales, syntaxiques, dialogiques, etc.) et contextuelles (sociales, environnementales, type et phase d'interaction, etc.)
- construire des modèles reposant sur des jeux d'indicateurs permettant l'estimation de l'état mental du locuteur et d'autres de ses caractéristiques (genre, timbre, accent, etc.).

Selon un mode de mise en oeuvre avantageux de l'invention, les valeurs d'un indicateur donné sont mesurées pour une pluralité de tailles de fenêtres temporelles de mesure. Plus précisément, l'invention prévoit que les tailles des fenêtres temporelles de mesure sont au plus égales aux tailles des fenêtres temporelles définies pour établir ladite hiérarchie temporelle.

De cette manière, il est possible de prendre en compte des effets vocaux ponctuels qui nécessitent des fenêtres d'analyse plus étroites, comme ceux contenus dans l'expression de l'accent, par opposition aux effets globaux dont la détection peut se contenter de fenêtres plus larges, comme la mélodie de la voix par exemple.

En d'autres termes, l'utilisation de fenêtres de moindre taille pour le calcul des valeurs des indicateurs offre une granulométrie plus fine, capable d'intégrer des effets dans l'expression vocale qui seraient imperceptibles avec des fenêtres de taille plus grande.

L'invention propose par ailleurs que des signaux dudit corpus sont segmentés en épisodes d'étiquette d'état mental donné.

Cette disposition présente plusieurs avantages. Elle permet d'abord de constituer un corpus dont les éléments sont mieux caractérisés en termes d'état mental, au sens où chaque élément ne présente qu'une et une seule étiquette estimée d'état mental (absence ou présence d'émotion par exemple). D'autre part, cette segmentation d'un message en épisodes d'état mental donné offre la possibilité de déterminer des probabilités de transition entre différentes étiquettes d'état mental, c'est-à-dire par exemple les probabilités de passer d'un état avec ou sans émotion à un état avec ou sans émotion.

Le procédé d'estimation d'état mental conforme à l'invention comprend également une phase de classification comportant des étapes consistant à :

- lors de l'émission dudit signal par ladite personne, déplacer par pas élémentaires successifs une fenêtre de mesure de taille égale à la taille de la fenêtre temporelle la plus grande, et déterminer à chaque pas élémentaire lesdits jeux d'au moins une valeur d'indicateur de chaque modèle de rang n,
- en déduire les scores correspondant au moyen de chaque modèle de rang n,
- combiner les scores fournis par un modèle de rang n pour la caractéristique d'ordre n avec les scores fournis par le modèle de rang n - 1 pour les n - 1 premières caractéristiques,
- en déduire les scores d'état mental fournis par le modèle de rang N,
- appliquer une stratégie de décision quant à l'état mental de la personne.

Afin d'augmenter la fiabilité du résultat obtenu, le score mesuré à un pas donné est combiné à la probabilité de transition de l'étiquette de l'état mental établie au pas précédent.

Enfin, il est important de bien préciser que le procédé d'estimation de l'état mental d'une personne présenté ici n'est pas limité à l'apprentissage et la classification effectués sur des seuls signaux vocaux, mais qu'il s'étend à d'autres types de signaux impliquant le geste, les expressions du visage, la posture, des mesures électrophysiologiques, etc.

L'invention concerne également un programme d'ordinateur comprenant des instructions de programme pour la mise en oeuvre du procédé de classification selon l'invention lorsque ledit programme est exécuté par un ordinateur.

La description qui va suivre en regard des dessins annexés, donnés à titre d'exemples non limitatifs, fera bien comprendre en quoi consiste l'invention et comment elle peut être réalisée.

La figure 1 est une représentation schématique d'un procédé d'estimation d'état mental, conforme à l'invention, la partie (a) de la figure se rapportant à la phase d'apprentissage et la partie (b) à la phase de classification.

La figure 2 est un schéma représentant deux fenêtres successives t et t+1 de traitement d'un signal vocal en phase de classification.

On va maintenant décrire l'invention dans le cadre de la détection d'une émotion (présence ou absence d'émotion) dans un signal vocal émis par une personne, cette description pouvant être étendue sans difficulté pour un homme du métier à la caractérisation (nature, intensité) de l'état mental détecté, à d'autres états mentaux, émotionnels et/ou cognitifs, ainsi qu'à des signaux autres que des signaux vocaux.

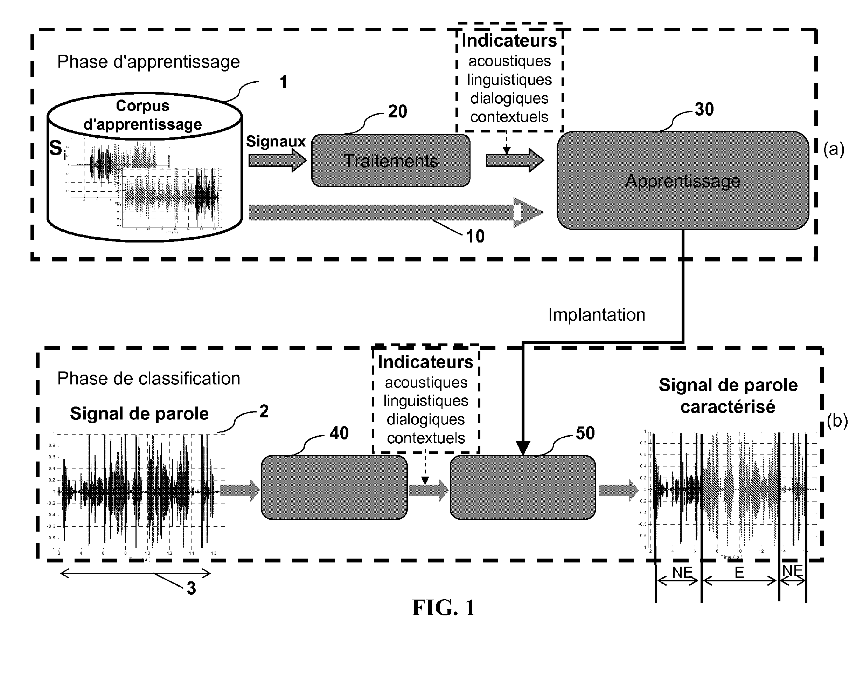

Comme le montre la figure 1, le procédé d'estimation proposé comporte en (a) une première phase, dite phase d'apprentissage, puis en (b) une deuxième phase, dite de classification, qui consiste à appliquer à un signal vocal émis par une personne le modèle construit lors de la phase d'apprentissage afin de décider de la présence ou l'absence d'émotion dans ce signal.

La phase d'apprentissage va maintenant être décrite en détail.

Dans une première étape de la phase d'apprentissage, on définit un nombre N de caractéristiques comprenant, d'une part, la caractéristique étudiée, ici l' « émotion », et, d'autre part, N - 1 caractéristiques participant à l'expression de l'émotion dans le signal vocal concerné. On considérera pour simplifier uniquement les deux caractéristiques « genre » et « timbre », sachant que les principes décrits ici s'appliquent à un nombre quelconque de caractéristiques de toute nature. Dans cet exemple, le nombre total N de caractéristiques vaut donc 3.

Chaque caractéristique est associée à des étiquettes qui correspondent aux valeurs que cette caractéristique peut prendre. Ici, la caractéristique « genre » peut prendre les étiquettes « homme » H ou « femme » F. De même, on affectera à la caractéristique « timbre » les étiquettes « rauque » R et « clair » C. Enfin, si on se limite à la seule détection de l'émotion, la caractéristique « émotion » prendra les étiquettes « présence d'émotion » E ou « absence d'émotion » NE.

Cette définition des caractéristiques et des étiquettes associées étant réalisée, une hiérarchie temporelle est établie de manière à préciser les relations de dépendance entre les N caractéristiques et leur associer une taille d'une fenêtre temporelle augmentant selon le niveau hiérarchique.

Cette hiérarchie temporelle peut être établie au moyen de tests prédictifs 10 réalisés par des personnes, ou testeurs, sur des signaux vocaux préenregistrés, ces tests consistant à définir la taille optimale des fenêtres temporelles à partir desquelles se déclenche la caractérisation perceptive du genre, du timbre et de l'émotion.

Les résultats de ces tests perceptifs font apparaître par exemple que le genre du locuteur est la première caractéristique perçue par les participants au test et ceci à partir d'une taille de fenêtre minimale $\Delta t_G$ de 0,5 s. La deuxième caractéristique perçue est le timbre sur une taille de fenêtre $\Delta t_T$ d'une seconde puis l'émotion à partir d'une fenêtre $\Delta t_E$ de deux secondes.

La hiérarchie temporelle pour ces trois caractéristiques est donc, dans l'ordre croissant, « genre », « timbre » et « émotion ». Il faut noter que la caractéristique étudiée, ici l'émotion, doit correspondre au niveau hiérarchique le plus élevé associé à la taille de fenêtre la plus grande. Cette condition se trouve être réalisée de fait par le résultat des tests perceptifs effectués. Si elle ne l'était pas, la taille de fenêtre associée à l'émotion serait forcée à la taille la plus grande observée à la suite des tests perceptifs.

En résumé, à la fin de cette étape on dispose du tableau hiérarchique suivant :

| Caractéristique | Taille de fenêtre |
|---|---|
| Genre (H/F) | $\Delta t_G$ = 0,5 s |
| Timbre (R/C) | $\Delta t_T$ = 1 s |
| Emotion (E/NE) | $\Delta t_E$ = 2 s |

Lors d'une deuxième étape de la phase d'apprentissage, un corpus 1 de signaux vocaux enregistrés est constitué. Le nombre de signaux présents dans le corpus est de l'ordre de quelques milliers par exemple.

De manière à améliorer la précision des résultats obtenus sur ce corpus 1, les signaux vocaux enregistrés sont segmentés en épisodes homogènes émotionnellement, chaque épisode représentant un segment de signal auquel une et une seule étiquette E ou NE peut être attribuée. Le corpus 1 contient alors des signaux, ou épisodes de signaux, homogènes quant à la caractéristique « émotion ».

Chaque signal $S_i$ du corpus 1 est annoté en termes de caractéristique au sens où il lui est attribué par des personnes une étiquette pour chaque caractéristique. On obtient alors un tableau du type suivant :

| Signal vocal | Genre | Timbre | Emotion |
|---|---|---|---|
| $S_1$ | H | R | NE |
| $S_2$ | H | C | NE |
| $S_3$ | F | C | E |
| $S_4$ | F | C | E |
| $S_5$ | F | R | NE |
| etc. | | | |

A ce stade, des probabilités peuvent être calculées sur l'ensemble des signaux du corpus concernant les transitions entre les étiquettes de la caractéristique « émotion ». Ces probabilités, notées p(E/NE), p(E/E), p(NE/E) et p(NE/NE), sont représentatives des occurrences pour un locuteur de passer d'un premier état émotionnel E ou NE à un deuxième état émotionnel E ou NE.

Par ailleurs, un certain nombre de grandeurs acoustiques (énergie, « pitch », spectre, cepstre, etc.), linguistiques (mots, phonèmes, adjectifs, etc.), dialogiques (tour de parole, répétition, etc.), et/ou contextuels (qualité du réseau de transmission, bruits ambiants, etc.) sont définies comme étant susceptibles d'exprimer un état émotionnel.

A chacune de ces grandeurs sont associés des indicateurs, tels que moyenne, écart-type, maximum, plage, etc. On appellera $I_k$ l'ensemble de ces indicateurs toutes grandeurs confondues. Différentes tailles $\Delta t_j$ de fenêtre sont également définies pour le calcul des valeurs de ces indicateurs, par exemple $\Delta t_1$ = 250 ms, $\Delta t_2$ = 500 ms, $\Delta t_3$ = 750 ms, ..., la taille de la dernière fenêtre étant au moins égale à la fenêtre temporelle ($\Delta t_E$ = 2 s) la plus grande observée lors des tests perceptifs.

Puis, dans une troisième étape 20, la valeur de chaque indicateur $I_k$ est calculé sur chaque signal $S_i$ du corpus 1 à l'intérieur de chaque fenêtre temporelle $\Delta t_j$. On obtient ainsi des valeurs d'indicateurs $v_i^{kj}$:

| | Indicateurs | | | | | | | | |
|---|---|---|---|---|---|---|---|---|---|
| | $I_1$ | | | $I_2$ | | | $I_3$......... | | |
| $\Delta t_1$ | $\Delta t_2$ | $\Delta t_3$... | $\Delta t_1$ | $\Delta t_2$ | $\Delta t_3$... | $\Delta t_1$ | $\Delta t_2$ | $\Delta t_3$ ... |

(suite)

| | | | | Indicateurs | | | | | | | | |
|---|---|---|---|---|---|---|---|---|---|---|---|---|
| $S_1$ | H | R | NE | $V_1{}^{11}$ | $V_1{}^{12}$ | $V_1{}^{13}$ | $V_1{}^{21}$ | $V_1{}^{22}$ | $V_1{}^{23}$ | $V_1{}^{31}$ | $V_1{}^{32}$ | $V_1{}^{33}$ |

etc.

Une quatrième étape 30 de la phase d'apprentissage consiste à construire trois modèles successifs, le modèle de rang n (n = 1, 2, 3) ayant pour but d'établir une relation entre un jeu d'au moins une valeur d'indicateur et un score reflétant le degré d'association entre ledit jeu et la combinaison d'étiquettes des n premières caractéristiques de ladite hiérarchie temporelle.

Avantageusement, les valeurs d'indicateurs du modèle de rang n sont celles calculées pour des tailles de fenêtre au plus égale à la taille de la fenêtre définie au niveau n de la hiérarchie temporelle définie précédemment.

Ainsi, dans l'exemple proposé, le modèle de rang n = 1 concerne la caractéristique « genre ». Un classifieur basé par exemple sur des GMM (« Gaussian Mixture Model ») est utilisé pour établir une relation entre des scores s(H) et s(F), correspondant respectivement aux étiquettes H et F, et des jeux de valeurs $v_i{}^{kj}$ d'indicateurs $I_k$ calculés sur des tailles $\Delta t_j$ de fenêtre au plus égales à 0,5 s (valeur de $\Delta t_G$). Notons qu'un score peut être une probabilité ou une distance dans l'espace des indicateurs.

De même, le modèle de rang n = 2 permet de déterminer à partir de deux classifieurs, l'un pour l'étiquette H et l'autre pour l'étiquette F, des scores s(R/H), s(C/H), et s(R/F), s(C/F), à partir de jeux de valeurs d'indicateurs calculés sur des fenêtres de taille au plus égale à 1 s (valeur de $\Delta t_T$).

Enfin, de la même manière au niveau du modèle de rang n = 3, quatre nouveaux classifieurs appliqués aux quatre classes R/H, C/H, R/F et C/F sur des jeux de valeurs d'indicateurs calculés sur des tailles de fenêtres au plus égales à 2 s, conduisent à des scores s(E/R/H), s(E/C/H), s(E/R/F), s(E/C/F), s(NE/R/H), s(/NE/C/H), s(NE/R/F) et s (NE/C/F).

La phase d'apprentissage étant ainsi réalisée, il est possible d'appliquer les modèles construits durant cette phase à des signaux de parole pour décider si un signal donné présente ou non de l'émotion.

Cette deuxième phase appelée phase de classification va maintenant être décrite en détail.

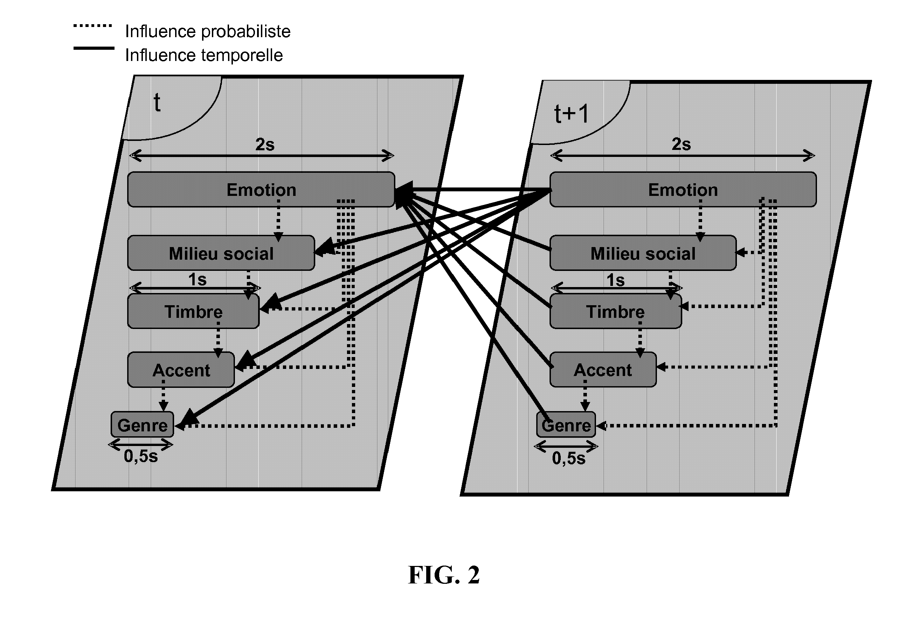

Comme le montrent les figures 1 et 2, le signal 2 de parole considéré est analysé 40 à travers une fenêtre glissante 3 pendant toute la durée du signal. La taille de la fenêtre est prise égale à celle qui a été définie au cours de la phase d'apprentissage pour la caractéristique « émotion », soit $\Delta t_E$ = 2 s. Cette fenêtre est déplacée par pas égal à un pourcentage, 50% par exemple, de la plus petite fenêtre temporelle hiérarchique, 0,5 s (valeur de $\Delta t_G$), soit un pas élémentaire de 0,25 s.

A chaque pas, les jeux d'indicateurs déterminés pour chaque combinaison de caractéristiques au cours de la phase d'apprentissage sont calculés sur les tailles de fenêtre associées.

Puis, les modèles établis dans l'étape 30 de la phase d'apprentissage sont appliqués en 50 aux jeux d'indicateurs ainsi déterminés.

La figure 2 indiquent en plus des caractéristiques « genre », « timbre » et « émotion » considérées ici d'autres caractéristiques qui pourraient également être prises en compte, comme l' »accent » et le « milieu social ».

Dans la fenêtre de 2 s, quatre mesures d'indicateurs seront effectuées sur des fenêtres de 0,5 s pour estimer les deux étiquettes H et F du genre dont la taille de fenêtre associée est de 0,5 s. Une moyenne de ces quatre mesures est calculée sur les 2 s de la fenêtre totale. Les scores correspondants s(H) et s(F) pour les étiquettes H et F sont déduits de ces mesures d'indicateurs au moyen du modèle de rang 1.

Pendant la durée de 2 s de la fenêtre, deux mesures de jeux d'indicateurs permettront de la même manière de calculer sur des fenêtres de timbre de 1 s les scores associés aux combinaisons R/H, C/H, R/F et C/F soit s(R/H), s(C/H), et s(R/F), s(C/F).

Enfin, la mesure des jeux d'indicateurs associés aux huit combinaisons des caractéristiques « genre », « timbre » et « émotion » conduit aux huit scores correspondants s(E/R/H), s(E/C/H), s(E/R/F), s(E/C/F), s(NE/R/H), s (/NE/C/H), s(NE/R/F), et s(NE/C/F)

On effectue alors le cumul de ces scores pour aboutir, toujours dans la fenêtre de 2 s à une estimation des scores pour la présence d'émotion s(E) et d'absence d'émotion s(NE) de la manière suivante :

$$s(E) = s(E/R/H).s(R/H).s(H) + s(E/C/H).s(C/H)/s(H) + s(E/R/F).s(R/F).s(F) +$$

$$s(E/C/F).s(C/F).s(F)$$

$$s(NE)= \quad s(NE/R/H).s(R/H).s(H) \quad + \quad s(NE/C/H).s(C/H)/s(H) \quad +$$
$$s(NE/R/F).s(R/F).s(F) + s(NE/C/F).s(C/F).s(F)$$

Ce même traitement est réalisé à chaque pas élémentaire d'analyse. On connaît donc les scores s(E) et s(NE) à chaque pas.

On applique ensuite une stratégie de décision quant à la présence ou l'absence d'émotion dans le signal de parole étudié. Par exemple, si à un moment du signal le score de présence d'émotion est de plus de 90%, alors on en déduira la présence d'émotion sur l'ensemble du signal.

Bien entendu, d'autres stratégies de décision peuvent être utilisées.

Ainsi que le montre la figure 2, il est possible de tenir compte du résultat obtenu sur une fenêtre (t) dans résultat obtenu sur la fenêtre suivante (t + 1) séparée d'un pas élémentaire de 0,25 s. Si, par exemple, l'estimation de l'émotion sur la première fenêtre (t) a conduit au score s(E), alors l'estimation de l'émotion sur la fenêtre (t + 1) est le résultat d'une combinaison du score obtenu sur la fenêtre (t + 1) de la probabilité de transition p(E/NE) si le score obtenu est s(NE), ou p(E/E) si le score obtenu est s(E).

Comme l'évaluation de l'émotion est effectuée à chaque pas, on peut également utiliser les résultats de l'analyse pour identifier les épisodes émotionnels du signal.

De la même manière, chaque caractéristique peut être évaluée sur l'ensemble du signal ou sur des portions.

## Revendications

1. Procédé d'estimation de l'état mental d'une personne à partir d'un signal émis par ladite personne, **caractérisé en ce que** ledit procédé comprend une phase d'apprentissage comportant des étapes consistant à :

   - définir un ensemble de N caractéristiques comprenant, d'une part, ledit état mental et, d'autre part, N-1 caractéristiques participant à l'expression de l'état mental dans ledit signal, une caractéristique étant susceptible d'être associée à une pluralité d'étiquettes,
   - établir une hiérarchie temporelle précisant les relations de dépendance entre lesdites N caractéristiques et associant une taille ($\Delta t_G$, $\Delta t_T$, $\Delta t_E$) de fenêtre temporelle perceptive par caractéristique augmentant selon le niveau hiérarchique, ledit état mental présentant la taille de fenêtre la plus grande,
   - construire un corpus (1) de signaux, et attribuer à chaque signal ($S_i$) dudit corpus :

     * une étiquette pour chacune desdites N caractéristiques,
     * au moins une valeur ($v_i^{kj}$) d'au moins un indicateur ($I_k$) d'au moins une grandeur, mesurée sur ledit signal de corpus,

   - construire successivement, à partir de l'ensemble des signaux du corpus (1), N modèles, un modèle de rang n (n=1, ..., N) consistant à établir une relation entre un jeu d'au moins une valeur ($v_i^{kj}$) d'indicateur et un score reflétant le degré d'association entre ledit jeu et la combinaison d'étiquettes des n premières caractéristiques de ladite hiérarchie temporelle.

2. Procédé selon la revendication 1, dans lequel les valeurs ($v_i^{kj}$) d'un indicateur donné sont mesurées pour une pluralité de tailles ($\Delta t_j$) de fenêtres temporelles de mesure.

3. Procédé selon la revendication 2, dans lequel les tailles ($\Delta t_j$) des fenêtres temporelles de mesure sont au plus égales aux tailles ($\Delta t_G$, $\Delta t_T$, $\Delta t_E$) des fenêtres temporelles définies pour établir ladite hiérarchie temporelle.

4. Procédé selon l'une quelconque des revendications 1 à 3, dans lequel des signaux dudit corpus (1) sont segmentés en épisodes d'étiquette d'état mental donnée.

5. Procédé selon l'une quelconque des revendications 1 à 4, comprenant une phase de classification comportant des étapes consistant à :

   - lors de l'émission dudit signal par ladite personne, déplacer par pas élémentaires successifs une fenêtre de mesure de taille égale à la taille de la fenêtre temporelle la plus grande, et déterminer à chaque pas élémentaire lesdits jeux d'au moins une valeur d'indicateur de chaque modèle de rang n,
- en déduire les scores correspondant au moyen de chaque modèle de rang n,
- combiner les scores fournis par un modèle de rang n pour la caractéristique d'ordre n avec les scores fournis par le modèle de rang n-1 pour les n-1 premières caractéristiques,
- en déduire les scores d'état mental fournis par le modèle de rang N,
- appliquer une stratégie de décision quant à l'état mental de la personne.

**6.** Procédé selon la revendication 5, dans lequel le score mesuré à un pas donné est combiné à la probabilité de transition de l'étiquette de l'état mental établie au pas précédent.

**7.** Procédé selon l'une quelconque des revendications 1 à 6, dans lequel ledit signal est un signal multimodal.

**8.** Procédé selon la revendication 7, dans lequel ledit signal est un signal vocal.

**9.** Procédé selon la revendication 8, dans lequel lesdites grandeurs sont, séparément ou en combinaison, des grandeurs acoustiques, des grandeurs linguistiques et dialogiques, des grandeurs contextuelles.

**10.** Programme d'ordinateur comprenant des instructions de programme pour la mise en oeuvre du procédé de classification selon l'une quelconque des revendications 5 à 9 lorsque ledit programme est exécuté par un ordinateur.

**Phase d'apprentissage**

Corpus d'apprentissage **1**

$S_i$

Signaux **20**

Traitements

Indicateurs
acoustiques
linguistiques
dialogiques
contextuels

**30**

Apprentissage

**10**

(a)

Implantation

**Phase de classification**

**Signal de parole** **2**

**40**

Indicateurs
acoustiques
linguistiques
dialogiques
contextuels

**50**

**Signal de parole caractérisé**

(b)

**3**

NE E NE

**FIG. 1**

EP 1 981 021 A1

FIG. 2

**Office européen des brevets**

# RAPPORT DE RECHERCHE EUROPEENNE

Numéro de la demande

EP 08 15 4426

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | YANG LI AND YUNXIN ZHAO: "RECOGNIZING EMOTIONS IN SPEECH USING SHORT-TERM AND LONG-TERM FEATURES" 5TH INTERNATIONAL CONFERENCE ON SPOKEN LANGUAGE PROCESSING, 1998, octobre 1998 (1998-10), pages P379-382, XP007000264 Alinéas 1,2.1-2.3, 3 ----- | 1-10 | INV. G10L15/22 G10L17/00 |
| Y | VERVERIDIS D ET AL: "Emotional speech classification using Gaussian mixture models" CIRCUITS AND SYSTEMS, 2005. ISCAS 2005. IEEE INTERNATIONAL SYMPOSIUM ON KOBE, JAPAN 23-26 MAY 2005, PISCATAWAY, NJ, USA,IEEE, 23 mai 2005 (2005-05-23), pages 2871-2874, XP010816191 ISBN: 0-7803-8834-8 * page 2871, colonne de gauche, ligne 1 - page 2873, colonne de gauche, ligne 19; figure 2 * ----- | 1-10 | |
| A | US 5 987 415 A (BREESE JOHN S [US] ET AL) 16 novembre 1999 (1999-11-16) * colonne 2, ligne 16 - colonne 5, ligne 47; figures 2-4,5a,5b,7 * ----- | 1-10 | DOMAINES TECHNIQUES RECHERCHES (IPC)<br><br>G10L |
| A | MURRAY I R ET AL: "TOWARD THE SIMULATION OF EMOTION IN SYNTHETIC SPEECH: A REVIEW OF THE LITERATURE ON HUMAN VOCAL EMOTION" JOURNAL OF THE ACOUSTICAL SOCIETY OF AMERICA, AIP / ACOUSTICAL SOCIETY OF AMERICA, MELVILLE, NY, US, vol. 93, no. 2, 1 février 1993 (1993-02-01), pages 1097-1108, XP000348831 ISSN: 0001-4966 * page 1099, colonne de gauche, ligne 44 - colonne de droite, ligne 55 * ----- | 1-10 | |

Le présent rapport a été établi pour toutes les revendications

| Lieu de la recherche | Date d'achèvement de la recherche | Examinateur |
|---|---|---|
| Munich | 14 juillet 2008 | Dobler, Ervin |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.......................................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 08 15 4426

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-07-2008

| Document brevet cité<br>au rapport de recherche | Date de<br>publication | Membre(s) de la<br>famille de brevet(s) | Date de<br>publication |
|---|---|---|---|
| US 5987415 A | 16-11-1999 | US 6185534 B1<br>US 6212502 B1 | 06-02-2001<br>03-04-2001 |

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20030069728 A

**Littérature non-brevet citée dans la description**

- **VERVERIDIS, D. ; KOTROPOULOS, C.** Emotional Speech Recognition : Resources, features and methods. *In Speech Communication,* 2006, vol. 48, 1162-1181

- **GRIMM, M, KROSCHEL, K. ; NARAYANAN, S.** Modelling Emotion Expression and Perception Behaviour in Auditive Emotion Evaluation. *Proceedings of Prosody,* 2006
- **LEE, C.M. ; YILDIRIM, S. ; BULUT, M.** Emotion Recognition based on Phoneme Classes. *Proceedings ICSLP,* 2004